# EUROPEAN PATENT SPECIFICATION

(11) **EP 3 960 703 B1**
(45) Date of publication and mention of the grant of the patent: **07.06.2023**
(21) Application number: 20192874.4
(22) Date of filing: 26.08.2020
(51) Int. Cl.: C01B 13/14, B29C 64/00, B82Y 30/00, C01G 31/02, H05H 1/00, B82Y 40/00, H05H 1/24

(54) **METHOD FOR IN-SITU SYNTHESIS AND DEPOSITION OF METAL OXIDE NANOPARTICLES WITH ATMOSPHERIC PRESSURE PLASMA**
VERFAHREN ZUR IN-SITU-SYNTHESE UND -ABSCHEIDUNG VON METALLOXIDNANOPARTIKELN MIT ATMOSPHÄRENDRUCKPLASMA
PROCÉDÉ DE SYNTHÈSE ET DE DÉPÔT IN SITU DE NANOPARTICULES D'OXYDE MÉTALLIQUE À PLASMA À PRESSION ATMOSPHÉRIQUE

(43) Date of publication of application: 02.03.2022
(73) Proprietor: Institute Jozef Stefan, 1000 Ljubljana (SI)
(72) Inventor: Vasudevan, Aswathy, 1000 Ljubljana (SI); Filipic, Gregor, 1000 Ljubljana (SI); Zavasnik, Janez, 1000 Ljubljana (SI); Cvelbar, Uros, 1000 Ljubljana (SI)
(74) Representative: Nederlandsch Octrooibureau

(56) References cited:
- EP-A1- 2 093 305
- EP-B1- 1 896 215
- SHIN D H ET AL: "Preparation of vanadium pentoxide powders by microwave plasma-torch at atmospheric pressure", MATERIALS CHEMISTRY AND PHYSICS, ELSEVIER SA, SWITZERLAND, TAIWAN, REPUBLIC OF CHINA, vol. 99, no. 2-3, 10 October 2006 (2006-10-10), pages 269-275, XP024994773, ISSN: 0254-0584, DOI: 10.1016/J.MATCHEMPHYS.2005.10.026 [retrieved on 2006-10-10]

## Description

### FIELD OF THE INVENTION

The current invention concerns a method for the synthesis of metal oxide nanoparticles, particularly vanadium pentoxide nanoparticles, from metal oxide macropowder using an atmospheric pressure plasma.

### BACKGROUND OF THE INVENTION

The scientific potential of nanomaterials currently attracts much attention for a diverse range of applications, such as catalysis, energy production, coatings and computers. This is also true for nanoparticles consisting of metal oxides. The currently available methods of synthesising metal oxide nanoparticles typically include one or more of chemical synthesis, mechanical grinding, colloidal precipitation and gas-phase nucleation and growth (aerosol process). Among the existing techniques, gas-phase synthesis has benefits because of the purity of the resulting product, but the control of the distribution of particles and the rate of aggregation and agglomeration are challenging.

Considering transition metal oxides, particularly vanadium pentoxide nanoparticles attract attention due to their unique properties. High-purity particles of vanadium pentoxide are highly desired in certain field of industry, such as in energy materials, medicine and aerospace. According to the statistics of recent years, domestic demand of high-purity vanadium pentoxide is expected to increase in the European Union, United States and Japan over the coming years. Reduction of the particle size to the nano-range and maximising of the surface area of vanadium pentoxide (V₂O₅), will further expand the range of applications because of the change in electrical resistance on response to various stimuli such as the applied electrical field [1], thermal treatment [2] or ultraviolet light irradiation [3].

Several methods have been disclosed in the prior art for the synthesis of metal oxide nanoparticles on an industrial scale. The various methods disclosed try to control the particle size of the nanoparticles and thereby the particle size distribution in different ways. For example, in US2017/0298516A1 and US2017/0259501A1, an atmospheric plasma jet is used for printing nanoparticles. The nanoparticles are dispersed in a liquid and used as an ink. The dispersion is delivered to a substrate's surface through a plasma jet. The final product is a film. This is not a synthesis method for nanoparticles since the initial particles in the ink are already nano-sized. Accordingly, if the particles are in the micro-sized range, they remain the same during the process, and are not reduced in size. In addition, the particles get printed/melted on the surface of the substrate.

US8,282,906B2 discloses another plasma-associated method for nanoparticle synthesis, specifically titanium oxide nanoparticles. The method comprises generating plasma from oxygen in a chamber and contacting the oxygen plasma via a connection part with an organic precursor of titanium oxide in a remote chamber. The plasma oxidises the organic titanium oxide precursor, and the titanium oxide particles deposit. The resulting particles have a size distribution that mainly falls between 8 and 12 nm. Their crystal structure can, however, not be controlled (anatase or rutale phase, single- or polycrystal structure) and the impurities pose a problem.

US8,029,595B2 discloses the use of an RF plasma torch to synthesise nanoparticles from a solution or suspension comprising dissolved or suspended precursors of the intended particle material. Using a nebulising technique, an aerosol is created from the solution or suspension which is lead to the plasma torch where it converted to the intended material in the form of nanoparticles. The nanoparticles are subsequently deposited onto the surface of a substrate. This method does not enable the deposition of individual nanoparticles.

The method described in US7,169,375B2 produces nanoparticles from a sol method involving complicated chemistry with mixtures of metal alkoxides and organosilanes. The procedures are lengthy, involving many heating and drying steps lasting five or more hours. The final products are nanoparticles coated with an organic material to prevent agglomeration. The pure crystalline metal-oxide nanoparticles are not achievable without an additional cleaning step.

US2015/0162596A1 and US2015/162583A1 disclose plasma spraying (painting) of electrodes with lithium and silicon precursor nanoparticles. The precursors are admixed in a liquid carrier which serves for transport and cooling of the precursors in the plasma. The mixture of the precursors in the liquid carrier is injected into the plasma under pressure. The result is a thick layer of a silicon and lithium, mostly melted, nanoparticle coating on top of a conductive material. This method is not suitable to deposit separated, non-deformed nanoparticles.

US8,318,128 discloses a method for the preparation of VO₂ nanoparticles by a reaction of a vanadyl ester - VO(OR)₃, wherein R is an alkyl group - with a carboxylic acid in an aqueous medium, followed by precipitation of VO₂ nanoparticles.

US5,935,293, US5,749,937, US5,788,738, US5,851,507 and US5,935,293 all disclose methods for rapid expansion or quenching of a gaseous phase during synthesis.

US5,935,293 and US5,749,937 disclose methods that uses metal halides as a precursor for creating metal powder. These methods use a plasma torch as a means for high-temperature thermal conversion.

US5,851,507 and US5,788,738 disclose a method for producing nanoscale powder from a precursor material by evaporating the precursor material in a gaseous atmosphere by means of a thermal reactor with the help of a radiofrequency plasma.

US5,935,293 discloses a method for thermally converting gaseous precursors in a plasma arc between the electrodes of a plasma torch resulting in ultrafine solid particles. EP1896215 B1 discloses a process for producing metal oxide nanoparticles by passing metal salt materials through a plasma torch operated at atmospheric pressure.

SHIN D H ET AL, MATERIALS CHEMISTRY AND PHYSICS, ELSEVIER SA, SWITZERLAND, TAIWAN, REPUBLIC OF CHINA, vol. 99, no. 2-3, 10 October 2006 (2006-10-10), pages 269-275, discloses a method for producing V2O5 nanoparticles by decomposition of gas-phase VOCl3 in an O2/Ar/H2 microwave plasma generated at atmospheric pressure EP2093305 A1 discloses a method for applying metal oxide nanoparticles on a substrate. The method comprises the steps of providing a colloidal solution of the nanoparticles and nebulizing the solution on the substrate by using atmospheric pressure plasma.

It is an objective of the present invention to provide an improved and/or simplified method for the production of metal oxide nanoparticles, particularly vanadium pentoxide nanoparticles.

It is a further objective of the present invention to provide an improved and/or simplified method for the production of metal oxide nanoparticles, particularly vanadium pentoxide nanoparticles, wherein the formed metal oxide nanoparticles can be directly deposited onto temperature-sensitive substrates.

It is a further objective of the present invention to provide a method for the production of metal oxide nanoparticles, particularly vanadium pentoxide nanoparticles, with improved control of the purity and/or the crystallinity and/or the particle size distribution of the metal oxide nanoparticles.

### SUMMARY OF THE INVENTION

The inventors have unexpectedly found that the above objectives can be met by a method wherein a metal oxide macropowder dispersed in a liquid is converted to an aerosol and wherein the aerosol is subsequently contacted with an atmospheric pressure plasma. The resulting metal oxide nanoparticles can be directly deposited onto temperature-sensitive substrates, like plastics.

The method can be applied with any atmospheric pressure plasma (jet) with an inlet feed of gas and a metal oxide macropowder dispersed in a liquid. Nanoparticles of any metal oxide which is dispersible in water or any other simple liquid, can be synthesised using this method.

The metal oxide nanoparticles are of the same chemical composition and crystal structure as the selected macrosized metal oxide powder. Accordingly, with a proper selection of the purity and/or the crystal structure of the metal oxide macropowder, the purity and/or the crystal structure of the metal oxide nanoparticles can be controlled.

The plasma from inert gases converts the metal oxide macropowder to nanoparticles. Because no chemical reactions are involved in the size reduction of the particles, no further purification is needed, and the synthesised nanoparticles can therefore be deposited directly on a substrate of interest.

The method results in unimodal particle size distributions. The plasma prevents or reduces nanoparticle agglomeration before adhering to the substrate.

The method is beneficial for precise applications, such as in electronics and sensors.

Accordingly, in an aspect, the invention concerns a method for the in-situ synthesis of metal oxide nanoparticles with atmospheric pressure plasma, the method including the steps of:
a) preparing a dispersion (15) from a metal oxide macropowder in a liquid;
b) nebulising the dispersion (15) obtained in step (a) in a nebuliser (3) by injection of an inert carrier gas (1) to form an aerosol (4);
c) providing a tubular system (22) having a dielectric tubular mixing section (10) and a tubular plasma generating section (24),
   wherein said tubular system (22) has a side wall (16, 16a, 16b), a bottom (11) in the dielectric tubular mixing section (10) and a top (17) in the tubular plasma generating section (24), wherein the central axis of tubular system (22) is positioned substantially vertical,
   wherein the dielectric tubular mixing section (10) comprises a dielectric inlet tube (14) having a first end connected to an opening (18) in the side wall (16b) of the dielectric tubular mixing section (10) and a second end (19) connected to the nebuliser (3), wherein the plasma generating section (24) comprises a dielectric tube (23) extending into the dielectric tubular mixing section (10) up to the opening (18) in the side wall (16b) of the dielectric tubular mixing section (10), and
   wherein the tubular plasma generating section (24) has an opening (20) in its side wall (16a) connected to dielectric tube (23), wherein the opening (20) is positioned above, in the direction of the central axis of tubular system (22), opening (18) in the side wall (16b) of the dielectric tubular mixing section (10);
d) supplying an inert working gas (7) to dielectric tube (23) of the tubular plasma generating section (24) via opening (20) in the side wall (16a) and creating an atmospheric pressure plasma from this inert working gas (7) at the outer end of dielectric tube (23) extending into the dielectric tubular mixing section (10);
e) supplying the aerosol (4) obtained in step (b) to the dielectric tubular mixing section (10) via dielectric inlet tube (14) and opening (18) in the side wall (16b);
f) allowing interaction of the aerosol (4) and the plasma in the dielectric tubular mixing section (10) to generate metal oxide nanoparticles characterized by a particle size distribution with a Dv99 of less than 100 nm, preferably with a Dv90 below 10 nm; and
g) deposition of said metal oxide nanoparticles through an orifice (21) in the bottom (11) of the dielectric tubular mixing section (10) onto a solid or semi-solid substrate (13).

### BRIEF DESCRIPTION OF FIGURES

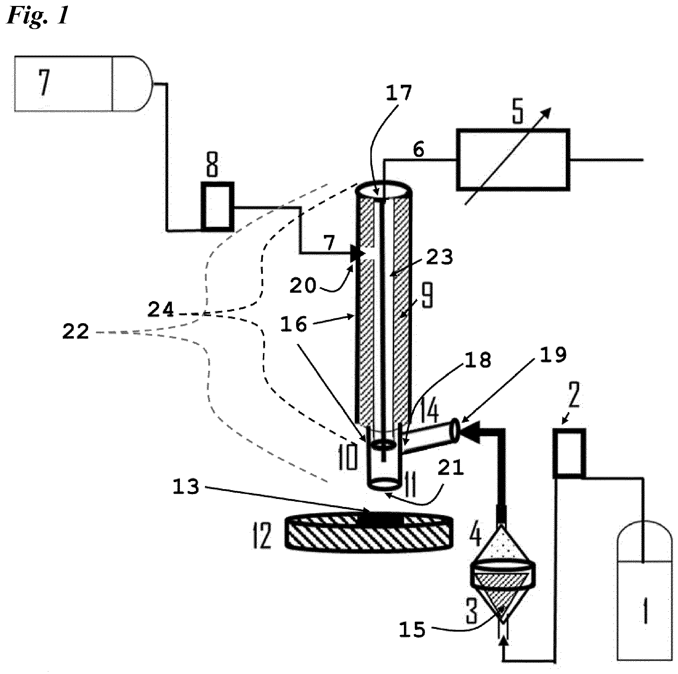

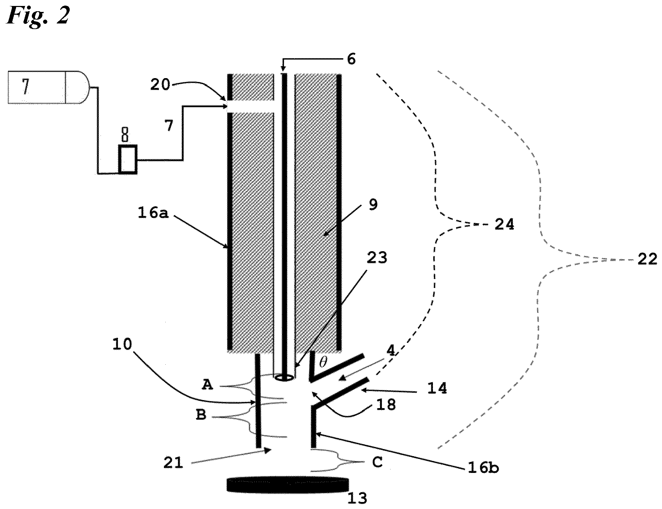

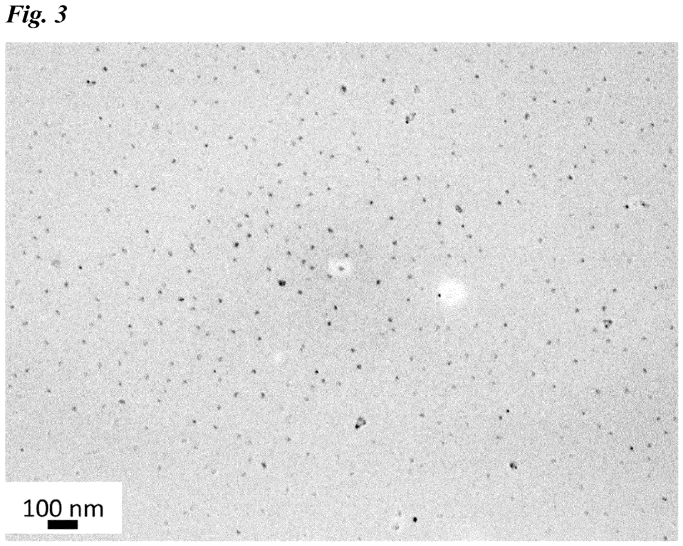

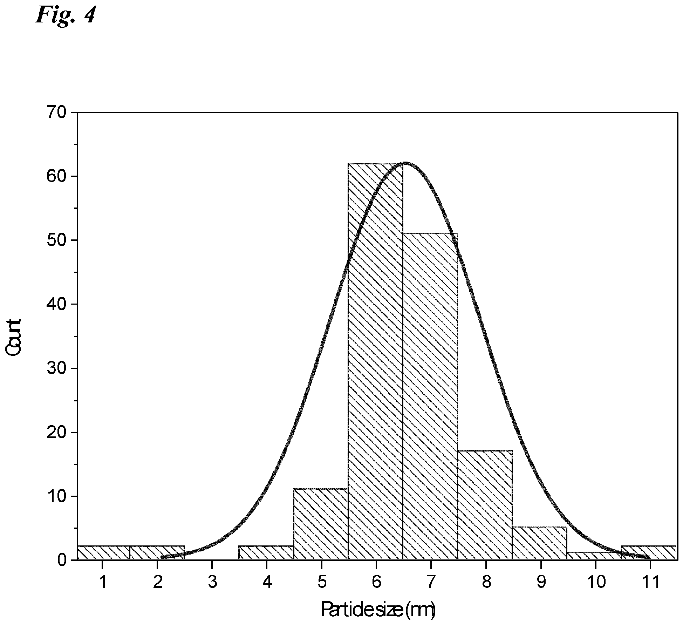

Figure 1 depicts a simplified schematic flow diagram of the method of the present invention. Figure 2 is a close up of the schematic flow diagram of Figure 1. Figure 3 is a microscopic picture of the vanadium oxide metal oxide nanoparticles, produced by the method of the invention. Figure 4 is a representation of the distribution of vanadium oxide nanoparticles produced by the method of the invention on a silicon wafer substrate.

### DEFINITIONS

The term '*sccm*' as used in the context of the present invention is an abbreviation of '*standard cubic centimetre per minute*' and concerns a volumetric unit of flow measurement defined at the following standard conditions: a temperature of 273.15 K and a pressure of 100000 Pa.

The wording '*substantially vertical*' in the context of the invention means substantially vertical with respect to the floor or bottom as the horizontal plane. In other words, it means substantially perpendicular to the floor or bottom. The wording *'substantially vertical*' concerns the (central axis of) the tubular system (22) as well as its individual sections (10) and (24).

The term '*substantially*' in '*substantially vertical*' is to be construed as vertical or close to vertical. Within the context of the invention, '*substantially vertical*' includes angles of between 80 and 90° with the floor or bottom as the horizontal plane.

The feature Dv50 as used herein and as used in the art concerns a median particle diameter, as measured with laser diffraction, based on a volume distribution. This median particle diameter is the diameter where half of the population of the particles lies below. The diameter Dv90 is the diameter where 90% of the population of the particles lies below, as measured with laser diffraction, based on a volume distribution. Likewise, the diameter Dv99 is the diameter where 99% of the population of the particles lies below, as measured with laser diffraction, based on a volume distribution.

The term *'nanoparticles'* as used herein concerns particles having a particle size of about 1 to about 100 nm.

The term *'macropowder'* as used herein refers to particles having a median particle diameter Dv50 of between 0.1 and 1 mm.

The term '*plasma*' as used herein means at least partially ionized gas.

The term '*semi-solid substrate'* in the context of the present invention relates to substrates having sufficient mechanical integrity to not interfere with a gas stream, such as for example a gel.

### DETAILED DESCRIPTION OF THE INVENTION

In an aspect, the invention concerns a method for the in-situ synthesis of metal oxide nanoparticles with atmospheric pressure plasma, the method including the steps of:
a) preparing a dispersion (15) from a metal oxide macropowder in a liquid;
b) nebulising the dispersion (15) obtained in step (a) in a nebuliser (3) by injection of an inert carrier gas (1) to form an aerosol (4);
c) providing a tubular system (22) having a dielectric tubular mixing section (10) and a tubular plasma generating section (24),
   wherein said tubular system (22) has a side wall (16, 16a, 16b), a bottom (11) in the dielectric tubular mixing section (10) and a top (17) in the tubular plasma generating section (24), wherein the central axis of tubular system (22) is positioned substantially vertical,
   wherein the dielectric tubular mixing section (10) comprises an dielectric inlet tube (14) having a first end connected to an opening (18) in the side wall (16b) of the dielectric tubular mixing section (10) and a second end (19) connected to the nebuliser (3),
   wherein the plasma generating section (24) comprises a dielectric tube (23) extending into the dielectric tubular mixing section (10) up to the opening (18) in the side wall (16b) of the dielectric tubular mixing section (10), and
   wherein the tubular plasma generating section (24) has an opening (20) in its side wall (16a) connected to dielectric tube (23), wherein the opening (20) is positioned above, in the direction of the central axis of tubular system (22), opening (18) in the side wall (16b) of the dielectric tubular mixing section (10);
d) supplying an inert working gas (7) to dielectric tube (23) of the tubular plasma generating section (24) via opening (20) in the side wall (16a) and creating an atmospheric pressure plasma from this inert working gas (7) at the outer end of dielectric tube (23) extending into the dielectric tubular mixing section (10);
e) supplying the aerosol (4) obtained in step (b) to the dielectric tubular mixing section (10) via dielectric inlet tube (14) and opening (18) in the side wall (16b);
f) allowing interaction of the aerosol (4) and the plasma in the dielectric tubular mixing section (10) to generate metal oxide nanoparticles characterized by a particle size distribution with a Dv99 of less than 100 nm, preferably with a Dv90 below 10 nm; and
g) deposition of said metal oxide nanoparticles through an orifice (21) in the bottom (11) of the dielectric tubular mixing section (10) onto a solid or semi-solid substrate (13).

The numbers between brackets (..) correspond to the numbers in Figures 1 and 2, wherein (22) represents a tubular system, (24) a tubular plasma generating section, such as a plasma jet generator, (1) an inert carrier gas, (2) a mass flow controller, (3) a nebuliser, (4) an aerosol, (5) an AC power generator, (6) a copper wire electrode, (7) an inert working gas, (8) a mass flow controller, (9) a dielectric cover, such as a teflon cover, (10) a dielectric tubular mixing section, (11) a bottom of tubular system (22), (12) a substrate holder, such as a movable substrate holder, (13) a substrate, such as a silicon wafer, (14) a dielectric inlet tube to dielectric tubular mixing section (10), (15) a dispersion, (16) a side or outer wall of tubular system (22), (16a) a side or outer wall of tubular plasma generating section (24), (16b) a side or outer wall of dielectric tubular mixing section (10), (17) a top of tubular system (22), (18) an opening in side wall (16b) of the dielectric tubular mixing section (10), (19) a second end of dielectric inlet tube (14), (20) an opening in side wall (16a) of tubular plasma generating section (24), (21) an orifice in the bottom (11) of dielectric tubular mixing section (10), and (23) a dielectric tube, such as a glass tube.

In a preferred embodiment, the tubular plasma generating section (24) comprises a dielectric tubular cover (9) surrounding dielectric tube (23). As will be appreciated by the skilled person, if dielectric tubular cover (9) is present, the side wall (16a) of the tubular plasma generating section (24) is the outer wall of the dielectric tubular cover (9) and the opening (20) is provided in the dielectric tubular cover (9) and in the dielectric tube (23). If dielectric tubular cover (9) is not present, the side wall (16a) of the tubular plasma generating section (24) is the outer wall of dielectric tube (23) and the opening (20) is provided in dielectric tube (23). Preferably, the dielectric tubular cover (9) is thick enough to prevent electric sparks from the electrode to reach the surface of cover (9). Such a cover is for example advantageous if the tubular system is designed as a hand-held system or if the system is to be connected to parts that are not dielectric. Dielectric tubular cover (9) is preferably a teflon cover. Dielectric tube (23) is preferably made of a dielectric material, more preferably of glass.

In a preferred embodiment, the nebuliser (3) is connected to the inert carrier gas source (1) via a mass flow controller (2) to regulate the gas flow. The flow of the inert carrier gas (1) should be sufficiently high to nebulise the dispersion (15). In a preferred embodiment, the flow of the inert carrier gas (1) applied in step (b) is more than 1000 sccm, more preferably between 1000-3000 sccm, even more preferably between 2000 and 2500 sccm, most preferably about 2300 sccm.

The inert carrier gas (1) preferably is a heavy inert gas, such that it can nebulise the dispersion (15) effectively and can carry the aerosol (4) effectively into the plasma.

In a preferred embodiment, the inert carrier gas (1) applied in step (b) is a noble gas, more preferably argon.

The aerosol (4) formed is introduced into the plasma in dielectric tubular mixing section (10) via dielectric inlet tube (14) and opening (18). Dielectric tubular mixing section (10) and dielectric inlet tube (14) are preferably made from glass.

In a preferred embodiment, dielectric inlet tube (14) is positioned at an angle of inclination *θ* with the central axis of tubular system (22), such that the second end (19) connected to the nebuliser (3) is positioned above the first end connected to the opening (18) in the direction of the central axis of tubular system (22), wherein the angle of inclination *θ* preferably is between 50 and 89°, more preferably between 60 and 70°. The angle of inclination *θ* of dielectric inlet tube (14) ensures effective flow of the aerosol (4) to the plasma.

Plasma is generated from an inert working gas. Preferably, the inert working gas is a noble gas, most preferably helium. In a preferred embodiment, the flow of the inert working gas is controlled by a mass flow controller (8).

In a preferred embodiment, the inert working gas (7) in step (f) represents from 6 vol.% to 10 vol.%, based on the carrier gas (6-10 volume units of inert working gas per 100 volume units of carrier gas) .

The inert working gas (7) is converted to a plasma, such as a plasma jet, in the tubular plasma generating section (24) of tubular system (22). The plasma jet can be generated by any suitable device, such as a dielectric barrier discharge (DBD). Preferably, the plasma jet generating device is a single electrode atmospheric pressure plasma device. The single electrode (6) preferably is a metallic wire electrode, more preferably a metallic wire copper electrode (6).

Atmospheric plasma can for example be generated from the inert working gas (7) in the tubular plasma generating section (24) of tubular system (22) using an AC power generator (5), having a frequency in the range of 20-60 kHz, connected to an (copper wire) electrode (6) inside the tubular plasma generating section (24), more particularly inside dielectric tube (23). Plasma is generated at the tip of the wire electrode (6). The inert working gas (7) is ionised, and plasma is generated in the dielectric tubular mixing section (10).

The geometry of dielectric tubular mixing section (10) is designed in a manner to ensure maximum interaction of the aerosols (4) with the plasma coming from the tubular plasma generating section (24). The part of dielectric tubular mixing section (10) where plasma and aerosol meet is rich in high-energy reactive species such as free electrons and radicals, which mediate the reduction of the size of the metal oxide particles.

In order to collect the metal oxide nanoparticles, a substrate of interest (13) is placed on a substrate holder (12) under orifice (21). In an embodiment, the substrate holder (12) is a movable substrate holder (12) to allow uniform deposition and distribution of the particles onto the substrate (13). The movable substrate holder (12) can be connected to a motor, which enables a programmable movement of the substrate holder (12).

Figure 2 represent a close up of part of the scheme of Figure 1. Figure depicts different zones (A) - (C) in and outside the tubular system (22). Moreover, Figure 2 shows the angle of inclination *θ* of dielectric inlet tube (14) with the central axis of tubular system (22).

In a preferred embodiment, the tubular system (22) itself comprises two adjacent zones (A) and (B) in a direction of the central axis of tubular system (22) from the top (17) to the bottom (11):
- zone (A) is part of the dielectric tubular mixing section (10), comprising the opening (18) for supplying the aerosol (4), wherein plasma is generated at the outer end of dielectric tube (23) extending into the dielectric tubular mixing section (10), and wherein the plasma interacts with the aerosol (4) resulting in high energy particles and ion bombardment; and
- zone (B) below zone (A) is an afterglow zone which is also part of the dielectric tubular mixing section (10) and which comprises the orifice (21) wherein both reactive and neutral particles are present and wherein particles may aggregate by recombination.

Although recombination of the particles takes place in zone (B), a major portion of the alteration of the particle size occurs in zone (A), wherein the rate of ion bombardment and the temperature are higher as compared to the afterglow zone (B).

Figure 2 also depicts a zone (C) outside tubular system (22) and in between the orifice (21) and the substrate (13). In deposition zone (C), the metal oxide nanoparticles and the remaining plasma come into contact with the atmosphere and also with the substrate (13). The substrate (13) can be any solid or semi-solid material, dielectric or conductive, such as glass, silicon or nickel. Preferably, the substrate (13) is a metal/metallic substrate. More preferably the substrate (13) is a silicon wafer.

In a preferred embodiment, the substrate (13) is placed at a distance between 1 and 15 mm, preferably between 4 and 10 mm, from the orifice (21) in the direction of the central axis of tubular system (22).

In a preferred embodiment, steps (b) -(g), preferably steps (a) - (g), are performed as a continuous process.

In a preferred embodiment, the metal oxides in the macropowder used in step (a) and in the nanoparticles obtained in step (g) are oxides of transition metals, more preferably selected from the groups consisting of oxides of vanadium (V), niobium (Nb), ruthenium (Ru), manganese (Mn), cobalt (Co) and nickel (Ni), even more preferably oxides of vanadium, very preferably vanadium pentoxide.

In a very preferred embodiment, the liquid used in the dispersion (15) of step (a) is water.

The number density of the synthesised nanoparticles per unit of surface area of the substrate (13) is determined by the amount of accumulative time of the deposition: either absolute time when deposition on the same spot, or by the speed of the substrate (13) movement through the depositing section underneath mixing tube orifice (21).

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb '*to comprise"* and its conjugations are used in its non-limiting sense to mean that items following the word are included, but items not specifically mentioned are not excluded. In addition, reference to an element by the indefinite article '*a*' or '*an*' does not exclude the possibility that more than one of the element is present, unless the context clearly requires that there be one and only one of the elements. The indefinite article '*a*' or '*an*' thus usually means '*at least one*'.

The following example serves to demonstrate the preferred embodiments of the present invention and should not be interpreted as limiting the scope of the invention.

### EXAMPLE

The method of the invention was applied to synthesise vanadium pentoxide (V₂O₅) nanoparticles from a vanadium pentoxide macropowder. The synthesised vanadium pentoxide nanoparticles were directly deposited onto a silicon wafer substrate. The precursor for V₂O₅ nanoparticles was a commercially available macropowder of V₂O₅ having a particle size of 0.1 - 1 mm, obtained from Sigma-Aldrich, Inc. The experimental setup, more particularly the tubular system (22), used is schematically depicted in Figures 1 and 2.

In a first step, a dispersion (15) of the vanadium pentoxide macropowder (0.01 g) in distilled water (25 mL) was prepared. 4 mL of the dispersion was transferred to a nebuliser (3) and nebulised with argon as an inert carrier gas (1) using a flow rate of 2300 sccm to provide an aerosol (4).

Prior to the injection of the aerosol (4), a flow of helium as an inert working gas (7) was introduced into the tubular atmospheric pressure plasma jet generator (24), which was operated by an AC power generator (5) at a frequency of 25 kHz (a high voltage power supply with 20 kV peak-peak, 20-30 mA at 20-60 kHz). The AC power generator (5) was connected to a concentric copper wire electrode (6) inside a glass tube (23) surrounded by a teflon cover layer (9). The inert working gas (7) was helium. The inert working gas (7) was introduced via opening (20). Helium represented 8% by volume of the gas flow of argon. The flowrate of helium was 200 sccm, which was sufficient to produce plasma. The plasma was generated and contacted with the aerosol (4) containing V₂O₅ inside the dielectric tubular mixing section (10). The dielectric tubular mixing section (10) was a glass tube of 8 mm diameter and with a length of 5 cm. A side glass inlet (14) for the aerosol (4), of the same diameter, and with a length of 2 cm, was connected to the dielectric tubular mixing section (10) at an angle of 65° with the central axis of the tubular system (22). The reduction of the particle size of the V₂O₅ macropowder to nanoparticles happened inside the plasma in the dielectric tubular mixing section (10) and was followed by deposition of the V₂O₅ nanoparticles on a silicon wafer substrate (13) of dimension 1 cm×1 cm, placed at 5 mm distance from the orifice (21) of the dielectric tubular mixing section (10). The silicon wafer substrate (13) was placed on a moving stage substrate holder (12). The stage was connected to a software-controlled motor, which had a displacement in xy-direction, in a zigzag pattern, ensuring the uniform deposition of the V₂O₅ nanoparticles. It took 1.5 minutes to complete the zigzag movement on 1 cm² of the substrate. The deposition process was done in several cycles of the same movement for 15 minutes.

A scanning electron microscope was used to image the resulting product on the silicon wafer substrate (Figure 3). The V₂O₅ nanoparticles were distributed all over the substrate (13), as seen in Figure 3. Statistical analysis was performed to determine the particle size distribution. The V₂O₅ nanoparticles had a particle diameter between 2-10 nm and the majority of the particles has a diameter of about 6 nm (Figure 4).

### REFERENCES

1.) Ng, S. H.; Patey, T. J.; Büchel, R.; Krumeich, F.; Wang, J. Z.; Liu, H. K.; Pratsinis, S. E.; Novák, P., Flame Spray-Pyrolyzed Vanadium Oxide Nanoparticles for Lithium Battery Cathodes., Phys. Chem. Chem. Phys., 2009, 11, 3748-3755.
2.) Cui, H. N.; Teixeira, V.; Meng, L. J.; Wang, R.; Gao, J. Y.; Fortunato, E., Thermochromic Properties of Vanadium Oxide Films Prepared by Dc Reactive Magnetron Sputtering., Thin Solid Films, 2008, 516, 1484-1488.
3.) Cheremisin, A.; Putrolaynen, V.; Velichko, A.; Pergament, A.; Kuldin, N.; Grishin, A., UV Laser Modification and Selective Ion-Beam Etching of Amorphous Vanadium Pentoxide Thin Films., Phys. Status Solidi Appl. Mater. Sci., 2009, 206, 1484-1487.

## Claims

1. A method for the in-situ synthesis of metal oxide nanoparticles with atmospheric pressure plasma, the method including the steps of:
a) preparing a dispersion (15) from a metal oxide macropowder in a liquid;
b) nebulising the dispersion (15) obtained in step (a) in a nebuliser (3) by injection of an inert carrier gas (1) to form an aerosol (4);
c) providing a tubular system (22) having a dielectric tubular mixing section (10) and a tubular plasma generating section (24),
wherein said tubular system (22) has a side wall (16, 16a, 16b), a bottom (11) in the dielectric tubular mixing section (10) and a top (17) in the tubular plasma generating section (24), wherein the central axis of tubular system (22) is positioned substantially vertical,
wherein the dielectric tubular mixing section (10) comprises a dielectric inlet tube (14) having a first end connected to an opening (18) in the side wall (16b) of the dielectric tubular mixing section (10) and a second end (19) connected to the nebuliser (3),
wherein the plasma generating section (24) comprises a dielectric tube (23) extending into the dielectric tubular mixing section (10) up to the opening (18) in the side wall (16b) of the dielectric tubular mixing section (10), and
wherein the tubular plasma generating section (24) has an opening (20) in its side wall (16a) connected to dielectric tube (23), wherein the opening (20) is positioned above, in the direction of the central axis of tubular system (22), opening (18) in the side wall (16b) of the dielectric tubular mixing section (10);
d) supplying an inert working gas (7) to dielectric tube (23) of the tubular plasma generating section (24) via opening (20) in the side wall (16a) and creating an atmospheric pressure plasma from this inert working gas (7) at the outer end of dielectric tube (23) extending into the dielectric tubular mixing section (10);
e) supplying the aerosol (4) obtained in step (b) to the dielectric tubular mixing section (10) via dielectric inlet tube (14) and opening (18) in the side wall (16b);
f) allowing interaction of the aerosol (4) and the plasma in the dielectric tubular mixing section (10) to generate metal oxide nanoparticles **characterized by** a particle size distribution with a Dv99 of less than 100 nm, preferably with a Dv90 below 10 nm; and
g) deposition of said metal oxide nanoparticles through an orifice (21) in the bottom (11) of the dielectric tubular mixing section (10) onto a solid or semi-solid substrate (13).

2. Method according to claim 1, wherein the dielectric inlet tube (14) is positioned at an angle of inclination *θ* with the central axis of tubular system (22), such that the second end (19) connected to the nebuliser (3) is positioned above the first end connected to the opening (18) in the direction of the central axis of tubular system (22), wherein the angle of inclination *θ* is preferably between 50 and 89°, more preferably between 60 and 70°.

3. Method according to claim 1 or 2, wherein tubular system (22) comprises two adjacent zones (A) and (B) in a direction of the central axis of tubular system (22) from the top (17) to the bottom (11):
• zone (A) is part of the dielectric tubular mixing section (10), comprising the opening (18) for supplying the aerosol (4), wherein plasma is generated at the outer end of dielectric tube (23) extending into the dielectric tubular mixing section (10), and wherein the plasma interacts with the aerosol (4) resulting in high energy particles and ion bombardment; and
• zone (B) below zone (A) is an afterglow zone which is also part of the dielectric tubular mixing section (10) and which comprises the orifice (21) wherein both reactive and neutral particles are present and wherein particles may aggregate by recombination.

4. Method according to any one of claims 1-3, wherein steps (b) -(g), preferably steps (a) - (g), are performed as a continuous process.

5. Method according to any one of claims 1-4, wherein the metal oxides in the macropowder used in step (a) and in the nanoparticles obtained in step (g) are oxides of transition metals, preferably selected from the groups consisting of oxides of vanadium (V), niobium (Nb), ruthenium (Ru), manganese (Mn), cobalt (Co) and nickel (Ni), more preferably oxides of vanadium, very preferably vanadium pentoxide.

6. Method according to any one of claims 1-5, wherein the liquid used in the dispersion (15) of step (a) is water.

7. Method according to any one of claims 1-6, wherein the inert carrier gas (1) applied in step (b) is a noble gas, preferably argon.

8. Method according to any one of claims 1-7, wherein the flow of the inert carrier gas (1) applied in step (b) is more than 1000 sccm, preferably between 1000-3000 sccm, more preferably between 2000 and 2500 sccm, most preferably about 2300 sccm.

9. Method according to any one of claims 1-8, wherein the inert working gas (7) is a noble gas, preferably helium.

10. Method according to any one of claims 1-9, wherein in step (f) the inert working gas (7) represents from 6 vol% to 10 vol%, based on the carrier gas.

11. Method according to any one of claims 1 - 10, wherein the atmospheric pressure plasma is an atmospheric pressure plasma jet.

12. Method according to any one of claims 1 - 11, wherein the tubular plasma generating section (24) comprises a dielectric tubular cover (9) surrounding dielectric tube (23).

13. Method according to any one of claims 1 - 12, wherein the substrate (13) is placed at a distance between 1 and 15 mm, preferably between 4 and 10 mm, from the orifice (21) in the direction of the central axis of tubular system (22).

14. Method according to any one of claims 1 - 13, wherein the substrate (13) is a silicon wafer.

## Patentansprüche

1. Verfahren zur In-situ-Synthese von Metalloxid-Nanopartikeln mit Atmosphärendruckplasma, wobei das Verfahren die folgenden Schritte umfasst:
a) Herstellen einer Dispersion (15) aus einem Metalloxid-Makropulver in einer Flüssigkeit;
b) Vernebeln der in Schritt (a) erhaltenen Dispersion (15) in einem Vernebler (3) durch Einblasen eines inerten Trägergases (1) zur Bildung eines Aerosols (4);
c) Bereitstellen eines rohrförmigen Systems (22) mit einem dielektrischen rohrförmigen Mischabschnitt (10) und einem rohrförmigen Plasmaerzeugungsabschnitt (24),
wobei das röhrenförmige System (22) eine Seitenwand (16, 16a, 16b), einen Boden (11) in dem dielektrischen röhrenförmigen Mischabschnitt (10) und ein Oberteil (17) in dem röhrenförmigen Plasmaerzeugungsabschnitt (24) aufweist, wobei die Mittelachse des röhrenförmigen Systems (22) im Wesentlichen vertikal angeordnet ist,
wobei der dielektrische rohrförmige Mischabschnitt (10) ein dielektrisches Einlassrohr (14) umfasst, das ein erstes Ende, das mit einer Öffnung (18) in der Seitenwand (16b) des dielektrischen rohrförmigen Mischabschnitts (10) verbunden ist, und ein zweites Ende (19), das mit dem Vernebler (3) verbunden ist, aufweist,
wobei der Plasmaerzeugungsabschnitt (24) ein dielektrisches Rohr (23) umfasst, das sich in den dielektrischen rohrförmigen Mischabschnitt (10) bis zu der Öffnung (18) in der Seitenwand (16b) des dielektrischen rohrförmigen Mischabschnitts (10) erstreckt, und
wobei der rohrförmige Plasmaerzeugungsabschnitt (24) eine Öffnung (20) in seiner Seitenwand (16a) aufweist, die mit dem dielektrischen Rohr (23) verbunden ist, wobei die Öffnung (20) in der Richtung der Mittelachse des rohrförmigen Systems (22) oberhalb der Öffnung (18) in der Seitenwand (16b) des dielektrischen rohrförmigen Mischabschnitts (10) angeordnet ist;
d) Zuführen eines inerten Arbeitsgases (7) zum dielektrischen Rohr (23) des rohrförmigen Plasmaerzeugungsabschnitts (24) über die Öffnung (20) in der Seitenwand (16a) und Erzeugen eines Atmosphärendruckplasmas aus diesem inerten Arbeitsgas (7) am äußeren Ende des dielektrischen Rohrs (23), das sich in den dielektrischen rohrförmigen Mischabschnitt (10) erstreckt;
e) Zuführen des in Schritt (b) erhaltenen Aerosols (4) zu dem dielektrischen rohrförmigen Mischabschnitt (10) über das dielektrische Einlassrohr (14) und die Öffnung (18) in der Seitenwand (16b);
f) Ermöglichen einer Wechselwirkung des Aerosols (4) und des Plasmas in dem dielektrischen röhrenförmigen Mischabschnitt (10), um Metalloxid-Nanopartikel zu erzeugen, die durch eine Teilchengrößenverteilung mit einem Dv99 von weniger als 100 nm, bevorzugt mit einem Dv90 unter 10 nm, gekennzeichnet sind; und
g) Ablagerung der Metalloxid-Nanopartikel durch eine Öffnung (21) im Boden (11) des dielektrischen röhrenförmigen Mischabschnitts (10) auf ein festes oder halbfestes Substrat (13).

2. Verfahren nach Anspruch 1, wobei das dielektrische Einlassrohr (14) in einem Neigungswinkel θ mit der Mittelachse des röhrenförmigen Systems (22) positioniert ist, so dass das zweite Ende (19), das mit dem Vernebler (3) verbunden ist, über dem ersten Ende positioniert ist, das mit der Öffnung (18) in Richtung der Mittelachse des röhrenförmigen Systems (22) verbunden ist, wobei der Neigungswinkel θ bevorzugt zwischen 50 und 89°, besonders bevorzugt zwischen 60 und 70° liegt.

3. Verfahren nach Anspruch 1 oder 2, wobei das röhrenförmige System (22) zwei benachbarte Zonen (A) und (B) in Richtung der Mittelachse des röhrenförmige Systems (22) vom Oberteil (17) zum Boden (11) umfasst:
Zone (A) ist Teil des dielektrischen röhrenförmigen Mischabschnitts (10), der die Öffnung (18) zum Zuführen des Aerosols (4) umfasst, wobei am äußeren Ende der dielektrischen Röhre (23), die sich in den dielektrischen röhrenförmigen Mischabschnitt (10) erstreckt, ein Plasma erzeugt wird und wobei das Plasma mit dem Aerosol (4) interagiert, was zu hochenergetischen Teilchen und Ionenbeschuss führt; und
Zone (B) unterhalb der Zone (A) ist eine Nachglühzone, die ebenfalls Teil des dielektrischen röhrenförmigen Mischabschnitts (10) ist und die Öffnung (21) umfasst, wobei sowohl reaktive als auch neutrale Teilchen vorhanden sind und wobei Teilchen durch Rekombination aggregieren können.

4. Verfahren nach einem der Ansprüche 1 - 3, wobei die Schritte (b) - (g), bevorzugt die Schritte (a) - (g), als kontinuierlicher Prozess durchgeführt werden.

5. Verfahren nach einem der Ansprüche 1 - 4, wobei die Metalloxide in dem in Schritt (a) verwendeten Makropulver und in den in Schritt (g) erhaltenen Nanopartikeln Oxide von Übergangsmetallen sind, bevorzugt ausgewählt aus den Gruppen bestehend aus Oxiden von Vanadium (V), Niob (Nb), Ruthenium (Ru), Mangan (Mn), Kobalt (Co) und Nickel (Ni), stärker bevorzugt Oxide von Vanadium, besonders bevorzugt Vanadium pentoxid.

6. Verfahren nach einem der Ansprüche 1 - 5, wobei die in der Dispersion (15) von Schritt (a) verwendete Flüssigkeit Wasser ist.

7. Verfahren nach einem der Ansprüche 1 - 6, wobei das in Schritt (b) eingesetzte inerte Trägergas (1) ein Edelgas, bevorzugt Argon, ist.

8. Verfahren nach einem der Ansprüche 1 - 7, wobei die Strömung des in Schritt (b) eingesetzten inerten Trägergases (1) mehr als 1000 sccm, bevorzugt zwischen 1000 und 3000 sccm, stärker bevorzugt zwischen 2000 und 2500 sccm, am meisten bevorzugt etwa 2300 sccm beträgt.

9. Verfahren nach einem der Ansprüche 1 - 8, wobei das inerte Arbeitsgas (7) ein Edelgas, bevorzugt Helium, ist.

10. Verfahren nach einem der Ansprüche 1 - 9, wobei das inerte Arbeitsgas (7) in Schritt (f) 6 bis 10 Vol.-%, bezogen auf das Trägergas, ausmacht.

11. Verfahren nach einem der Ansprüche 1 - 10, wobei das Atmosphärendruckplasma ein Atmosphärendruckplasmastrahl ist.

12. Verfahren nach einem der Ansprüche 1 - 11, wobei der rohrförmige Plasmaerzeugungsabschnitt (24) eine dielektrische rohrförmige Abdeckung (9) umfasst, die das dielektrische Rohr (23) umgibt.

13. Verfahren nach einem der Ansprüche 1 - 12, wobei das Substrat (13) in einem Abstand zwischen 1 und 15 mm, bevorzugt zwischen 4 und 10 mm, von der Öffnung (21) in der Richtung der Mittelachse des rohrförmigen Systems (22) angeordnet wird.

14. Verfahren nach einem der Ansprüche 1 - 13, wobei das Substrat (13) ein Siliciumwafer ist.

## Revendications

1. - Procédé de synthèse in situ de nanoparticules d'oxyde métallique avec plasma à pression atmosphérique, le procédé comprenant les étapes consistant à :
a) préparer une dispersion (15) à partir d'une macropoudre d'oxyde métallique dans un liquide ;
b) nébuliser la dispersion (15) obtenue à l'étape (a) dans un nébuliseur (3) par injection d'un gaz porteur inerte (1) pour former un aérosol (4) ;
c) fournir un système tubulaire (22) ayant une section de mélange tubulaire diélectrique (10) et une section de génération de plasma tubulaire (24),
ledit système tubulaire (22) ayant une paroi latérale (16, 16a, 16b), une partie inférieure (11) dans la section de mélange tubulaire diélectrique (10) et une partie supérieure (17) dans la section de génération de plasma tubulaire (24), l'axe central du système tubulaire (22) étant positionné sensiblement verticalement,
la section de mélange tubulaire diélectrique (10) comprenant un tube d'entrée diélectrique (14) ayant une première extrémité reliée à une ouverture (18) dans la paroi latérale (16b) de la section de mélange tubulaire diélectrique (10) et une seconde extrémité (19) reliée au nébuliseur (3),
la section de génération de plasma (24) comprenant un tube diélectrique (23) s'étendant dans la section de mélange tubulaire diélectrique (10) jusqu'à l'ouverture (18) dans la paroi latérale (16b) de la section de mélange tubulaire diélectrique (10), et
la section de génération de plasma tubulaire (24) ayant une ouverture (20) dans sa paroi latérale (16a) reliée au tube diélectrique (23), l'ouverture (20) étant positionnée au-dessus, dans la direction de l'axe central du système tubulaire (22), de l'ouverture (18) dans la paroi latérale (16b) de la section de mélange tubulaire diélectrique (10) ;
d) adresser un gaz de travail inerte (7) au tube diélectrique (23) de la section de génération de plasma tubulaire (24) par l'intermédiaire de l'ouverture (20) dans la paroi latérale (16a) et créer un plasma à pression atmosphérique à partir de ce gaz de travail inerte (7) à l'extrémité externe du tube diélectrique (23) s'étendant dans la section de mélange tubulaire diélectrique (10) ;
e) adresser l'aérosol (4) obtenu à l'étape (b) à la section de mélange tubulaire diélectrique (10) par l'intermédiaire du tube d'entrée diélectrique (14) et de l'ouverture (18) dans la paroi latérale (16b) ;
f) permettre une interaction de l'aérosol (4) et du plasma dans la section de mélange tubulaire diélectrique (10) pour générer des nanoparticules d'oxyde métallique **caractérisées par** une distribution de taille de particule avec un Dv99 inférieur à 100 nm, de préférence avec un Dv90 inférieur à 10 nm ; et
g) déposer lesdites nanoparticules d'oxyde métallique à travers un orifice (21) dans le fond (11) de la section de mélange tubulaire diélectrique (10) sur un substrat solide ou semi-solide (13).

2. - Procédé selon la revendication 1, dans lequel le tube d'entrée diélectrique (14) est positionné à un angle d'inclinaison *θ* avec l'axe central du système tubulaire (22), de telle sorte que la seconde extrémité (19) reliée au nébuliseur (3) est positionnée au-dessus de la première extrémité reliée à l'ouverture (18) dans la direction de l'axe central du système tubulaire (22), l'angle d'inclinaison *θ* étant de préférence entre 50 et 89°, de façon davantage préférée entre 60 et 70°.

3. - Procédé selon l'une des revendications 1 ou 2, dans lequel le système tubulaire (22) comprend deux zones adjacentes (A) et (B) dans une direction de l'axe central du système tubulaire (22) de la partie supérieure (17) à la partie inférieure (11) :
• la zone (A) fait partie de la section de mélange tubulaire diélectrique (10), comprenant l'ouverture (18) pour fournir l'aérosol (4), un plasma étant généré à l'extrémité externe du tube diélectrique (23) s'étendant dans la section de mélange tubulaire diélectrique (10), et le plasma interagissant avec l'aérosol (4), conduisant à des particules à haute énergie et à un bombardement ionique ; et
• la zone (B) au-dessous de la zone (A) est une zone de rémanence qui fait également partie de la section de mélange tubulaire diélectrique (10) et qui comprend l'orifice (21), dans laquelle des particules à la fois réactives et neutres sont présentes et dans laquelle des particules peuvent s'agréger par recombinaison.

4. - Procédé selon l'une quelconque des revendications 1 à 3, dans lequel les étapes (b) à (g), de préférence les étapes (a) à (g), sont réalisées sous la forme d'un procédé continu.

5. - Procédé selon l'une quelconque des revendications 1 à 4, dans lequel les oxydes métalliques dans la macropoudre utilisée dans l'étape (a) et dans les nanoparticules obtenues dans l'étape (g) sont des oxydes de métaux de transition, de préférence choisis dans les groupes consistant en les oxydes de vanadium (V), de niobium (Nb), de ruthénium (Ru), de manganèse (Mn), de cobalt (Co) et de nickel (Ni), de façon davantage préférée les oxydes de vanadium, de façon très préférée le pentoxyde de vanadium.

6. - Procédé selon l'une quelconque des revendications 1 à 5, dans lequel le liquide utilisé dans la dispersion (15) de l'étape (a) est de l'eau.

7. - Procédé selon l'une quelconque des revendications 1 à 6, dans lequel le gaz porteur inerte (1) appliqué à l'étape (b) est un gaz noble, de préférence de l'argon.

8. - Procédé selon l'une quelconque des revendications 1 à 7, dans lequel le débit du gaz porteur inerte (1) appliqué à l'étape (b) est supérieur à 1000 sccm, de préférence entre 1000 et 3000 sccm, de façon davantage préférée entre 2000 et 2500 sccm, de la façon que l'on préfère le plus d'environ 2300 sccm.

9. - Procédé selon l'une quelconque des revendications 1 à 8, dans lequel le gaz de travail inerte (7) est un gaz noble, de préférence l'hélium.

10. - Procédé selon l'une quelconque des revendications 1 à 9, dans lequel, à l'étape (f), le gaz de travail inerte (7) représente de 6 % en volume à 10 % en volume, sur la base du gaz porteur.

11. - Procédé selon l'une quelconque des revendications 1 à 10, dans lequel le plasma à pression atmosphérique est un jet de plasma à pression atmosphérique.

12. - Procédé selon l'une quelconque des revendications 1 à 11, dans lequel la section de génération de plasma tubulaire (24) comprend un recouvrement tubulaire diélectrique (9) entourant le tube diélectrique (23).

13. - Procédé selon l'une quelconque des revendications 1 à 12, dans lequel le substrat (13) est placé à une distance entre 1 et 15 mm, de préférence entre 4 et 10 mm, de l'orifice (21) dans la direction de l'axe central du système tubulaire (22).

14. - Procédé selon l'une quelconque des revendications 1 à 13, dans lequel le substrat (13) est une tranche de silicium.
